(19) Europäisches Patentamt / European Patent Office / Office européen des brevets

(11) **EP 3 290 818 A1**

(12) **EUROPEAN PATENT APPLICATION**

(43) Date of publication:
**07.03.2018   Bulletin 2018/10**

(51) Int Cl.:
**F24F 12/00** (2006.01)

(21) Application number: **16187246.0**

(22) Date of filing: **05.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nilan A/S**
**8722 Hedensted (DK)**

(72) Inventor: **Andersen, Torben**
**8722 Hedensted (DK)**

(74) Representative: **Chas. Hude A/S**
**H.C. Andersens Boulevard 33**
**1780 Copenhagen V (DK)**

(54)   **VENTILATION SYSTEM**

(57)   The present invention relates to a ventilation system for ventilating contaminated areas such as hospital or laboratory facilities, the ventilation system comprising an inlet ventilation duct comprising an inlet, an outlet and a first ventilator device, where the inlet ventilation duct is adapted to guide a flow of a clean air-mixture from the surroundings to the contaminated area, and where said flow is provided by the first ventilator device, an outlet ventilation duct comprising an inlet, an outlet and a second ventilator device, where the outlet ventilation duct is adapted to guide a flow of a contaminated air-mixture from the contaminated area to the surroundings, and where said flow is provided by the second ventilator device, where the inlet ventilation duct is sealed from the outlet ventilation duct to prevent a leak of the contaminated air-mixture from said outlet 2 to said inlet ventilation duct, and where the ventilation system comprises a heat recovery unit for exchanging heat between the air-mixtures in the inlet and the outlet ventilation ducts, where the heat recovery unit comprises a heat exchanging unit and a heat pipe unit. The present invention further relates to a heat recovery unit for use in the ventilation system.

Fig. 4

EP 3 290 818 A1

## Description

The present invention relates to a ventilation system for ventilating contaminated areas such as hospital or laboratory facilities, the ventilation system comprising

- an inlet ventilation duct comprising an inlet, an outlet and a first ventilator device, where the inlet ventilation duct is adapted to guide a flow of a clean air-mixture from the surroundings to the contaminated area, and where said flow is provided by the first ventilator device,
- an outlet ventilation duct comprising an inlet, an outlet and a second ventilator device, where the outlet ventilation duct is adapted to guide a flow of a contaminated air-mixture from the contaminated area to the surroundings, and where said flow is provided by the second ventilator device,
- where the inlet ventilation duct is sealed from the outlet ventilation duct to prevent a leak of the contaminated air-mixture from said outlet ventilation duct to said inlet ventilation duct, and
- where the ventilation system comprises a heat recovery unit for exchanging heat between the air-mixtures in the inlet ventilation duct and the outlet ventilation duct.

The present invention further relates to a heat recovery unit for use in a ventilation system for ventilating contaminated areas such as hospital or laboratory facilities, the heat recovery unit comprising

- a heat exchanging unit, and
- a heat pipe unit.

Ventilation systems have been known for several years for ventilating indoor areas by e.g. providing an inlet flow of clean air and an outlet flow of air from the area. Often, the inlet flow is colder than the outlet flow for which reason energy/heat recovery systems are provided for transferring heat from the outlet flow to the inlet flow. Examples of such recovery systems are rotary heat exchangers with an efficiency of the heat transfer of 65-86% and plate heat exchangers with an efficiency of the heat transfer of 70-90%.

However, in case the air in the indoor area is contaminated e.g. with viruses or toxic gases, the inlet flow of air must not be contaminated with the outlet flow of contaminated air to prevent the contaminated air from being reintroduced into the indoor area.

Thus, heat recovery systems, such as rotary and plate heat exchangers, in which there is a risk of the contaminated outlet air being reintroduced in the indoor area via the inlet flow cannot be used.

To prevent a reintroduction of contaminated air, fluid coupled batteries are often used, as they provide a transfer/exchange of heat by use of a fluid circulating between the inlet and outlet flow of air and thus results in minimal risk of reintroducing contaminated air into the indoor area. Fluid coupled batteries have an efficiency of heat transfer/exchange of app. 40-50%, but requires energy for operating its pumps. However, new requirements for ventilation systems requires an efficiency of heat transfer/exchange of at least 70%. This is not obtainable with the known energy/heat recovery systems.

Thus, known ventilation systems, which eliminate the risk of contaminating the inlet flow of air, do not provide a sufficiently high energy/heat recovery.

In accordance with the invention, there is provided a ventilation system for ventilating contaminated areas such as hospital or laboratory facilities, the ventilation system comprising

- an inlet ventilation duct comprising an inlet, an outlet and a first ventilator device, where the inlet ventilation duct is adapted to guide a flow of a clean air-mixture from the surroundings to the contaminated area, and where said flow is provided by the first ventilator device,
- an outlet ventilation duct comprising an inlet, an outlet and a second ventilator device, where the outlet ventilation duct is adapted to guide a flow of a contaminated air-mixture from the contaminated area to the surroundings, and where said flow is provided by the second ventilator device,
- where the inlet ventilation duct is sealed from the outlet ventilation duct to prevent a leak of the contaminated air-mixture from said outlet ventilation duct to said inlet ventilation duct, and
- where the ventilation system comprises a heat recovery unit for exchanging heat between the air-mixtures in the inlet ventilation duct and the outlet ventilation duct,
- where the heat recovery unit comprises a heat exchanging unit and a heat pipe unit.

Providing separated inlet and outlet ventilation ducts guiding separated flows of air-mixtures facilitates that the air-mixtures only come into contact with each other in the contaminated area and in the surroundings.

Thereby, it is prevented that contaminations such as viruses or bacteria from hospital wards or operating rooms, or toxic gases from laboratory facilities re-enters the contaminated area, which would be of harm to persons present in the contaminated areas.

Within the present invention, an air-mixture is to be understood as a gas-mixture comprising at least air, but may also comprise additives such as extra oxygen if required, or may comprise contaminants.

The inlet ventilation duct may be located adjacent to the outlet ventilation, so that minimal heat is lost during the transport of heat between the outlet and the inlet ventilation duct, which optimises the efficiency of the heat transfer. However, this requires that the inlet ventilation duct is sealed from the outlet ventilation duct to prevent a leak of the contaminated air-mixture from said outlet to said inlet ventilation duct.

Making use of a heat recovery unit comprising a heat exchanging unit (heat exchanger) and a heat pipe unit, neither of which exchanges heat by mixing the clean and the contaminated air-mixtures, facilitates a leak free exchange of heat.

The applicant has carried out tests on the efficiency of the heat transfer of the ventilation system, i.e. in transferring heat from the air-mixture in the outlet ventilation duct to the air-mixture in the inlet ventilation duct. In the tests, the heat exchanging unit was a heat pump. Said efficiency was calculated by the formula:

$$\eta = (t1 - t2)/(t3 - t2)$$

t1: temperature of clean air-mixture introduced to the contaminated area
t2: temperature of air of the surroundings
t3: temperature of contaminated air-mix from the contaminated area

In terms of power, said efficiency is:

$$\eta = (P1 - P4 - P2)/(P3 - P2)$$

P1: clean air-mixture introduced to the contaminated area
P2: air of the surroundings
P3: contaminated air-mix from the contaminated area
P4: power used by the heat pump

In a first test, the flow rate in the inlet and outlet ventilation ducts were 2525, 4008 and 5483 $m^3$/h, respectively, and the temperature of the clean air-mixture in the inlet ventilation duct was set to 21 °C. In a second test, the flow rate in the inlet and outlet ventilation ducts were 2523, 2520, 4025 and 5567 $m^3$/h, respectively, and the heat recovery unit was set to exchange a maximal amount of heat from the contaminated air-mixture in the outlet ventilation duct to the clean air-mixture in the inlet ventilation duct. The first test showed an efficiency of the heat transfer of 75.0%, 74.3%, and 71.7%, respectively. The second test showed an efficiency of the heat transfer of 113.6%, 120.6%, 102.4%, and 90.5%, respectively.

Thus, the present invention provides a leak free heat exchange between air-mixture in the inlet and the outlet ventilation ducts, and with a high efficiency of the heat transfer.

In an embodiment, the heat pipe unit can comprise at least one heat pipe extending from the inlet ventilation duct to the outlet ventilation duct.

Making use of at least one heat pipe eliminates the risk of a leak of contaminated air-mixture to the clean air-mixture during the heat exchange process, as the heat exchange is carried out by a condensation/evaporation-process of a liquid in a closed compartment, i.e. in the inner volume of the heat pipe.

Furthermore, a heat pipe is a passive system, which means that no energy is required for carrying out the heat exchange. This increases the efficiency of the heat transfer compared to active systems, which requires energy for carrying out the heat exchange e.g. for operating a pump.

The heat pipe may comprise copper as the heat pipe shell material and carbon dioxide as the heat pipe working fluid, as carbon dioxide functions at the required working temperature (at least -50°C to 30°C). Other heat pipe shell materials may be aluminium, stainless steel or titanium.

The heat pipe may have an outer diameter of approximately 12 mm to 30 mm and may have an inner diameter of 10 mm to 27 mm. Thus, the thickness of the shell/wall of the heat pipe is sufficient to withstand a pressure of the heat pipe working fluid of 160 bar, and said thickness may be approximately 1 mm to 1.5 mm. As an example, in case the heat pipe comprises copper as heat pipe shell material, the heat pipe may have an outer diameter of approximately 15 mm, and may have an inner diameter of approximately 13 mm. As an example, in case the heat pipe comprises stainless steel as heat pipe shell material, the outer diameter of the heat pipe may be between 22 mm and 25 mm.

The heat pipe may extend vertically from the inlet ventilation duct to the outlet ventilation duct to facilitate the movement of the working fluid back and forth between the vertically lower and upper part of the heat pipe during the evaporation/condensation process. The heat pipe may have an inner surface comprising a wick structure so that the evaporated working fluid of the heat pipe may move to the vertically lower part of the heat pipe after condensation by means of inter alia capillary forces.

In an embodiment, the at least one heat pipe can be adapted to at least extend from the inlet ventilation duct to the outlet ventilation duct and back into the inlet ventilation duct or reverse.

Having the at least one heat pipe extend at least from the inlet to the outlet and back into the inlet ventilation duct or reverse, e.g. by the heat pipe comprising at least two straight parts connected by at least one bent/curved/U-shaped part, facilitates that one heat pipe may be used instead of having to use two or more heat pipes and obtain a similar amount of heat exchanged between the air-mixtures in the inlet and the outlet ventilation ducts. Thereby, only one heat pipe has to be produced, and a working fluid only has to be introduced into one heat pipe instead of into two or more heat pipes, which in total makes the production of the heat pipe easier and reduces the expenses of production.

The at least one heat pipe may extend at least partly across the cross section of the inlet and of the outlet ventilation ducts. Advantageously, the at least one heat pipe of the heat pipe unit may extend across the entire cross section of the inlet and of the outlet ventilation ducts so as to optimise the heat absorbed from air-mixture in the outlet ventilation ducts and released to the air-mixtures in the inlet ventilation duct.

The heat pipe unit may comprise five heat pipes extending back and forth between the inlet and the outlet ventilation ducts.

The thickness of the shell/wall of the at least one heat pipe may be larger at said straight parts than at said bent/curved/U-shaped part such as 1/10 mm larger. Thus, in case the at least one heat pipe experiences an excessive internal pressure of the heat pipe working fluid, the heat pipe may break in a controlled manner at said bent/curved/U-shaped part. Thus, in case the heat pipe working fluid is carbon dioxide, the break in a controlled manner at said bent/curved/U-shaped part of the heat pipe may result in that the escaping carbon dioxide gas is converted to solid carbon dioxide (carbon dioxide snow) when exiting the heat pipe, which may easily be cleaned/repaired, instead of the heat pipe breaking uncontrollably and releasing carbon dioxide gas. Said bent/curved/U-shaped part of the heat pipe may be arranged at the vertically upper part of the heat pipe, which may be arranged in the inlet ventilation duct.

In an embodiment, the heat pipe unit can comprise a heat conducting cover extending at least partly across the cross-section of the inlet ventilation duct and/or of the outlet ventilation duct.

A heat conducting cover may further increase the exchange of heat between the air-mixtures. The heat conducting cover may be arranged in front of and/or after the at least one heat pipe relative to the flow direction of the air-mixture in the inlet and/or the outlet ventilation ducts. Thereby, the air-mixtures contact the heat conducting cover before and/or after the air-mixtures contact the heat pipe(s) and further increase the heat exchange between said air-mixtures.

The heat conducting cover may be porous and may comprise a mesh structure or a lamella/rib structure. The diameter of the pores of the heat conducting cover may be as low as possible to increase the amount of the air-mixture coming into contact with the heat conducting cover to optimise/maximise the heat exchanged, however without increasing the pressure drop across the heat conducting cover too much.

The heat conducting cover may comprise a heat conducting material and may comprise a metal such as aluminium, which has been found to provide a sufficient heat exchange with low production expenses.

In an embodiment, the heat exchanging unit can be adapted to exchange heat by means of condensation and evaporation of a liquid.

Heat exchange by means of condensation and evaporation of a liquid is known to be a reliable and efficient way of transferring heat.

In an embodiment, the heat exchanging unit can be arranged downstream of the heat pipe unit in the inlet ventilation duct and/or in the outlet ventilation duct.

Providing the heat exchanging unit downstream of the heat pipe unit, the heat pipe unit may firstly exchange the maximally possible amount of heat between the two air-mixtures and the heat exchanging unit may secondly exchange the remainder required heat (i.e. up to a required temperature level of the clean air-mixture). As the heat pipe is a passive system (passive heat exchanger) the amount of heat exchanged by a passive system is thus maximised, which means that the amount of energy required for operating the heat exchanging unit in case it is an active system (active heat exchanger) is minimised.

The heat exchanging unit may be a passive or an active system (passive or active heat exchanger).

The heat exchanging unit may comprise a control unit for controlling the amount of heat exchanged by the heat exchanging unit. The user may therefore control the temperature of the clean air-mixture in the inlet ventilation duct. The control of said temperature of the clean air-mixture is made more precise by providing the heat exchanging unit downstream of the heat pipe unit in the inlet and/or the outlet ventilation ducts.

In an embodiment, the heat exchanging unit can be a heat pump.

A heat pump is a reliable and low cost means of exchanging heat between air-mixtures.

In an embodiment, the first ventilator device can be arranged at the inlet of the inlet ventilation duct, and the second ventilator device can be arranged at the outlet of the outlet ventilation duct.

By providing the first ventilator device at the inlet of the inlet ventilation duct, the pressure of the clean air-mixture in the inlet ventilation duct will increase compared to outside the inlet ventilation duct due to inter alia the presence of the heat recovery unit. By providing the second ventilator device at the outlet of the outlet ventilation duct, the pressure of the contaminated air-mixture in the outlet ventilation duct will decrease compared to outside of the outlet ventilation duct due to inter alia the presence of the heat recovery unit. Thus, the pressure of the clean air-mixture in the inlet ventilation duct may be higher than of the contaminated air-mixture in the outlet ventilation duct. Thus, in case of a leak in the ventilation system, clean air-mixture would be more likely to flow to the outlet ventilation duct than contaminated air-mixture to flow to the clean air-mixture.

In an embodiment, the inlet ventilation duct and the outlet ventilation duct can be arranged adjacently.

Arranging the inlet and the outlet ventilation ducts adjacently facilitates that the at least one heat pipe may extend from the inlet ventilation duct to the outlet ventilation duct without having to extend across a wide intermediate region between said inlet and outlet ventilation ducts. Said intermediate region may preferably be narrow to reduce the amount of heat released by the heat pipe in said intermediate region. The at least one heat pipe may comprise thermal insulation at least in said intermediate region to reduce the amount of heat released by the heat pipe in said intermediate region.

In an embodiment, the inlet ventilation duct and the outlet ventilation duct can extend parallel.

Providing parallel extending ventilation ducts facilitates that the at least one heat pipe of the heat pipe unit and also the heat exchanging unit may extend from the inlet ventilation duct to the outlet ventilation duct. Furthermore, the required space for the installation and the arrangement of the ventilation system is reduced compared to if e.g. said ventilation ducts were arranged at two remote places or were not extending parallel.

In an embodiment, the inlet ventilation duct can be located vertically on top of the outlet ventilation duct.

Thereby, the at least one heat pipe of the heat pipe unit may extend substantially vertically from the outlet ventilation duct to the inlet ventilation duct, which facilitates the functioning of the at least one heat pipe unit.

In an embodiment, the ventilation system can comprise an intermediate region between the inlet ventilation duct and the outlet ventilation duct, where the intermediate region can provide a leak free seal between the inlet ventilation duct and the outlet ventilation duct.

An intermediate region between the inlet and the outlet ventilation ducts may be an open or a closed compartment (open or closed to the contaminated area and/or the surroundings). Providing a leak free seal between the inlet and the outlet ventilation ducts prevents contamination of the clean air-mixture in the inlet ventilation duct.

In case said intermediate region is a closed compartment, a potential leak of contaminated air-mixture to the closed compartment may be removed e.g. by ventilation. However, as the air pressure is relatively higher in the inlet ventilation duct compared to in the outlet ventilation duct, a possible leak would lead to a flow out of the inlet ventilation duct and into the outlet ventilation duct, which prevents contamination of the clean air-mixture in the inlet ventilation duct.

In an embodiment, the ventilation system can comprise at least a first, second and third releasably attachable module, where

- the first module can comprise the outlet of the inlet ventilation duct and the inlet of the outlet ventilation duct,
- the second module can comprise the heat exchanging unit and the heat pipe unit, and
- the third module can comprise the inlet of the inlet ventilation duct and the outlet of the outlet ventilation duct.

The ventilation system may comprise at least two modules. The modules may comprise at least part of the inlet ventilation duct or the outlet ventilation duct, or may comprise at least part of both the inlet ventilation duct and of the outlet ventilation duct. The modules may be adapted to be connected to each other and to provide a leak free seal between the connected modules e.g. by use of a sealing material.

Providing a ventilation system comprising modules makes the assembly of the ventilation system at the installation site easy and improves the logistics in shipping, and may reduce the volume to be shipped, as the modules may be closely packed. Furthermore, providing a ventilation system comprising modules reduces the time used for assembling the ventilation system, as the contents of the modules, e.g. heat pipe unit, ventilator devices, etc., have already been installed in the modules at the production site, which means that the used only has to consider connecting the modules. Moreover, providing the ventilation system in modules facilitates that the entire ventilation system may be installed at one location at the contaminated area, which reduces the space required for the installation.

In an embodiment, the ventilation system can further comprise a heating surface.

The heating surface may comprise a hollow structure for guiding a flow of a liquid, and/or may comprise at least one pipe for guiding a flow of water, e.g. in a similar manner as a radiator. The liquid, such as water or another liquid, which is able to be heated, may be warm and be lead through the heating surface. The heating surface may be located in either the inlet or the outlet ventilation duct. In case the heating surface is located inside the inlet ventilation duct, the heating surface may transfer heat to the clean air-mixture in the inlet ventilation duct. Thus, in case the heat pipe unit and the heat exchanging unit is not able to transfer the required amount of heat to the clean air-mixture, so that the clean air-mixture reaches a required temperature, the heating surface may transfer further heat to the clean air-mixture.

In accordance with the invention, there is further provided a heat recovery unit for use in a ventilation system for ventilating contaminated areas such as hospital or laboratory facilities, the heat recovery unit comprising

- a heat exchanging unit, and
- a heat pipe unit,
- where the heat recovery unit is for exchanging heat between an air-mixture in an inlet ventilation duct and an air-mixture in an outlet ventilation duct of the ventilation system.

In an embodiment, the flow directions of the respective air-mixtures in the inlet ventilation duct and in the outlet ventilation ducts are reverse/counter current, which provides the best heat exchange between the air-mixtures. In a counter current ventilation system, the relatively colder parts of the clean and contaminated air-mixtures are located above each other, and the relatively warmer parts of the clean and contaminated air-mixtures are located above each other.

The heat exchanging unit and/or the heating surface may be adapted to remove heat from the clean air-mixture in the inlet ventilation duct in case the temperature of the clean air-mixture is above the required temperature in the contaminated area. This may be the case if the temperature of the air-mixture in the surroundings is higher than the required temperature inside the contaminated area e.g. during summer.

The heating surface may remove heat from the clean air-mixture by e.g. receiving a flow of water with a temperature below the temperature of the clean air-mixture. The heat exchanging unit may remove heat from the clean air-mixture by e.g. reversing the flow direction of the liquid in the heat pump in case the heat exchanging unit is a heat pump.

The structure and function of the ventilation system will be described in more detail below with references to exemplary embodiments shown in the drawings wherein,

Fig. 1 shows a basic drawing of a ventilation system.

Fig. 2A shows a heat pipe unit seen from the front.

Fig. 2B shows a cross section of a heat pipe unit seen from the side.

Fig. 3 shows an embodiment of internal components of a ventilation system.

Fig. 4 shows an embodiment of a ventilation system seen in perspective.

Fig. 5 shows the modules of a ventilation system seen in perspective.

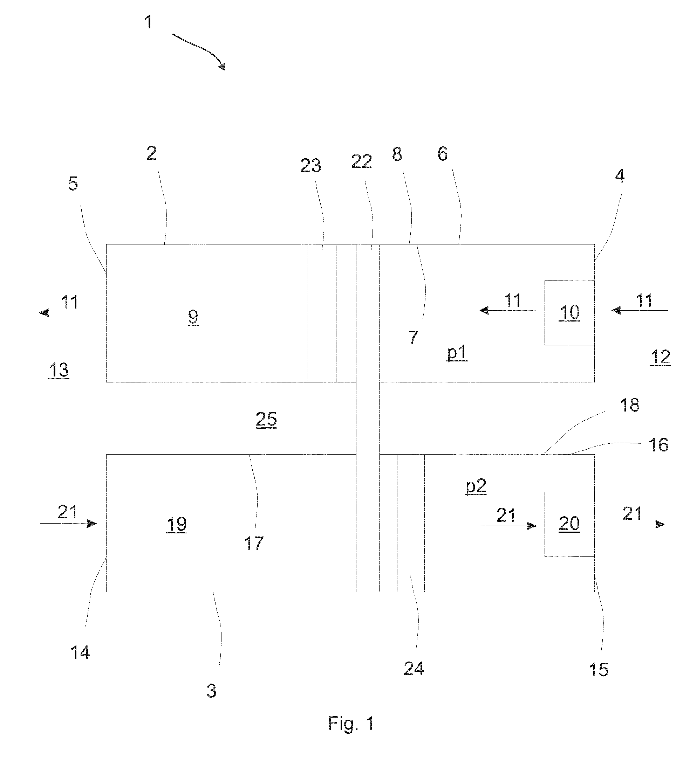

Fig. 1 shows a basic drawing of a ventilation system 1. The ventilation system 1 may comprise an inlet ventilation duct 2 and an outlet ventilation duct 3.

The inlet ventilation duct 2 may comprise an inlet 4 and an outlet 5 and a duct wall 6, where the duct wall 6 comprises an inner surface 7 and an outer surface 8. The inlet 4 and outlet 5 of the inlet ventilation duct 2 and the duct wall 6 defines an inner volume 9 of the inlet ventilation duct 2. The inlet ventilation duct 2 may comprise a first ventilator device 10 adapted to provide a flow 11 of a clean air-mixture from the surroundings 12 and into the inner volume 9 of the inlet ventilation duct 2 and further into a contaminated area 13. The inlet ventilation duct 2 is adapted to guide the flow 11 of a clean air-mixture from the surroundings 12 to the contaminated area 13.

The outlet ventilation duct 3 may comprise an inlet 14 and an outlet 15 and a duct wall 16, where the duct wall 16 comprises an inner surface 17 and an outer surface 18. The inlet 14 and outlet 15 of the outlet ventilation duct 3 and the duct wall 16 defines an inner volume 19 of the outlet ventilation duct 3. The outlet ventilation duct 3 may comprise a second ventilator device 20 adapted to provide a flow 21 of a contaminated air-mixture from the contaminated area 13 and into the inner volume 19 of the outlet ventilation duct 3 and further to the surroundings 12. The outlet ventilation duct 3 is adapted to guide the flow 21 of contaminated air-mixture from the contaminated area 13 to the surroundings 12.

The flow rate provided by the first 10 and second ventilator device 20 may be between 2000 and 6000 m³/h.

In Fig. 1, the inlet ventilation duct 2 and outlet ventilation ducts 3 are shown as comprising straight duct walls 6, 16, which extend linearly. However, it is foreseen within the present invention that the inlet ventilation duct 2 and/or the outlet ventilation duct 3 may have other shapes of the duct walls 6, 16 such as curved, angled or a combination thereof.

In Fig. 1, the ventilation system 1 is shown to comprise a heat pipe unit 22 and a heat exchanging unit, where the heat exchanging unit comprises a first 23 and a second part 24.

The heat pipe unit 22 may extend from the inlet ventilation duct 2 to the outlet ventilation duct 3 and thus exchange heat between the air-mixtures in said inlet ventilation duct 2 and outlet ventilation duct 3.

The first part 23 of the heat exchanging unit may be located in the inlet ventilation duct 2 and the second part 24 may be located in the outlet ventilation duct 3. The heat exchanging unit may be a heat pump, in which case said first 23 and second parts 24 may both be either a condensator or an evaporator depending upon whether the clean air-mixture in the inlet ventilation duct 2 has to be cooled or heated. If the clean air-mixture has to be heated, the first part 23 of the heat pump may function as a condensator and the second part 24 of the heat pump may function as an evaporator, and reverse if the clean air-mixture has to be cooled. A compressor unit (not shown) may provide pressure in the heat pump and thus facilitate the heat exchange.

The inlet ventilation duct 2 may be sealed from the outlet ventilation duct 3 to prevent a leak of the contaminated air-mixture from said outlet ventilation duct 3 to said inlet ventilation duct 2. Thus, at least the duct wall 6 of the inlet ventilation duct 2 and the duct wall 16 of the outlet ventilation duct 3 may be sealed from each other to prevent a leak of contaminated air-mixture to the clean air-mixture. Furthermore, the heat pipe unit 22 extending from the inlet ventilation duct 2 to the outlet ventilation duct 3 may be sealed at the transition points, where the at least one heat pipe enters the inlet ventilation duct 2 and outlet ventilation duct 3.

The inlet ventilation duct 2 may be arranged adjacent to or be in contact with the outlet ventilation duct 3 to reduce the space required for storing the ventilation system 1, and to increase the exchange of heat between said ventilation ducts 2,3, by said ventilation ducts 2, 3 directly touching.

Alternatively, the ventilation system 1 may comprise an intermediate region 25 between the inlet ventilation duct 2 and the outlet ventilation duct 3, and thus between the duct walls 6, 16 of said ventilation ducts 2, 3. The intermediate region 25 may provide a leak free seal between said inlet ventilation duct 2 and outlet ventilation duct 3. However, in the event of a leak of contaminated air-mixture from the outlet ventilation duct 3, the leaking contaminated air-mixture will flow into said intermediate region 25 and not directly into the clean air-mixture in the inlet ventilation duct 2.

As the first ventilator device 10 may be arranged at the inlet 4 of the inlet ventilation duct 2, and the second ventilator device 20 may be arranged at the outlet 15 of the outlet ventilation duct 3, the pressure p1 of the clean air-mixture may be higher than the pressure p2 of the contaminated air-mixture to further prevent a leak of contaminated air-mixture into the clean air-mixture.

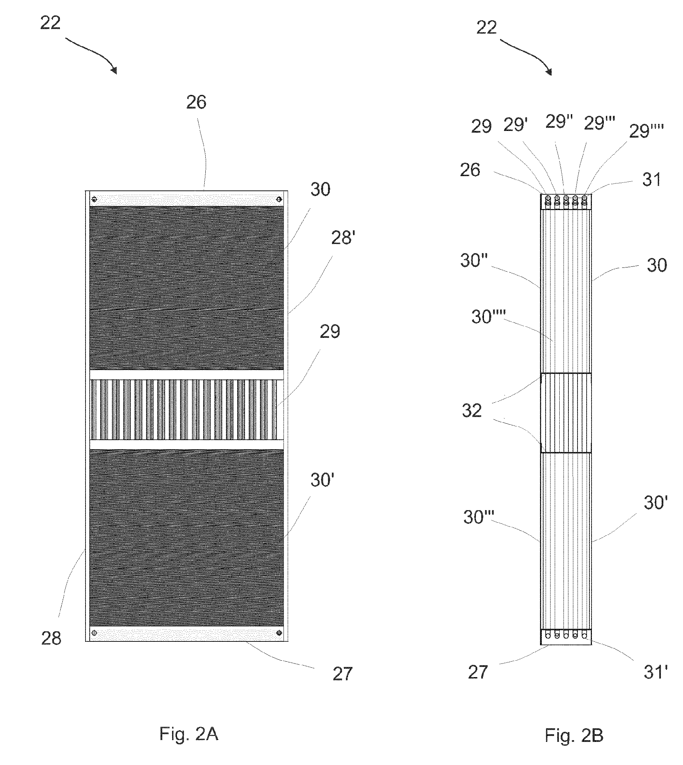

Fig. 2A shows a heat pipe unit 22 seen from the front. The heat pipe unit 22 is shown having a rectangular shape with a top edge 26, a bottom edge 27, and a first 28 and second side edge 28'.

The heat pipe unit 22 is shown comprising at least one heat pipe 29 extending from said bottom 27 to said top edge 26, and thus from the outlet ventilation duct 3 to the inlet ventilation duct 2. In Fig. 2A, more than one heat pipe 29 is shown. The at least one heat pipe 29 comprises at least one tube with blind ends.

The at least one heat pipe 29 may extend across the entire cross section of the heat pipe unit 22 and thus of the inlet ventilation duct 2 and outlet ventilation duct 3 so as to optimise the heat absorbed from and released to the air-mixtures in the outlet ventilation duct 3 and inlet ventilation ducts 2, respectively.

The at least one heat pipe 29 may comprise copper as the heat pipe shell material and carbon dioxide as the heat pipe working fluid, as carbon dioxide functions at the required working temperature (at least -50°C to 30°C). Other heat pipe shell materials may be aluminium, stainless steel or titanium.

The at least one heat pipe 29 may extend vertically from the outlet ventilation duct 3 to the inlet ventilation duct 2, to facilitate the movement of the working fluid back and forth between the vertically lower and upper parts of the heat pipe 29 during the evaporation/condensation-process. I.e. the relatively warm contaminated air-mixture in the outlet ventilation duct 3 evaporates the working fluid in said heat pipe 29 (at said vertically lower part), so that the evaporated working fluid moves vertically up to the vertically upper part of the heat pipe 29 located in the inlet ventilation duct 2, which comprises the relatively cold clean air-mixture, whereby the evaporated working fluid condenses to a liquid, while transferring heat to the clean air-mixture in the inlet ventilation duct 2, after which the working fluid moves to the vertically lower part of the heat pipe 29 by gravity and/or capillary forces.

The heat pipe 29 may have an inner surface comprising a wick structure so that the working fluid of the heat pipe 29 may be drawn by capillary forces to the vertically lower part of the heat pipe 29 after condensation.

The heat pipe unit 22 may comprise a heat conducting cover to facilitate the transfer of heat to and from the air-mixtures by allowing a flow of air-mixture to flow through it. In Fig. 2A, the heat pipe unit 22 is shown comprising a first 30 and second heat conducting cover 30'. Said first 30 and second heat conducting covers 30' may extend at least partly across the cross-section of the inlet ventilation duct 2 and/or of the outlet ventilation duct 3, respectively, and may thus have a quadratic shape in case said inlet 2 and outlet ventilation ducts 3 have this shape of cross section. At the intermediate region 25 between the inlet ventilation duct 2 and outlet ventilation duct 3, the heat pipe unit 22 may be without a heat conducting cover, as no heat exchange has to happen. The heat pipes 29 may comprise thermal insulation to prevent loss of heat/cold at the intermediate region 25. The heat pipe unit 22 may also comprise a third 30" and fourth heat conducting cover 30'" arranged on the back side of the heat pipe unit 22.

The heat conducting covers 30, 30', 30", 30'" may comprise a heat conducting material and may comprise a metal such as aluminium, which has been found to provide a sufficient heat exchange with low production expenses.

Fig. 2B shows a cross section of a heat pipe unit 22 seen from the side. In Fig. 2B, the heat pipe unit 22 is shown to comprise five heat pipes 29, 29', 29", 29'", 29"", which have a bent/curved shape, or U-shape, at the vertically upper 31 and lower parts 31' of the heat pipes 29, 29', 29", 29'", 29"" so that the five heat pipes 29, 29', 29", 29'", 29"" move back and forth between the top edge 26 and the bottom edge 27 of the heat pipe unit 22.

The heat pipes 29, 29', 29" ,29'", 29"" may be sealed at the transition area (interface) 32 between the intermediate region 25 and the inlet ventilation duct 2 and outlet ventilation duct 3, respectively. A support material 30"" may be arranged at least partly between the heat pipes 29, 29', 29", 29'", 29"" and the heat conducting covers 30, 30', 30", 30'" to support the heat pipes 29, 29', 29", 29'", 29"". The support material 30"" may also be heat conducting.

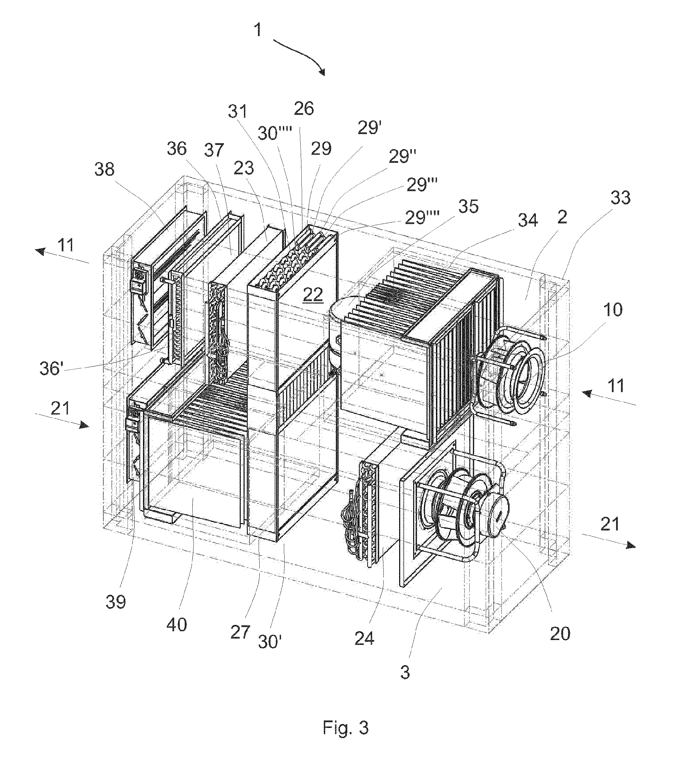

Fig. 3 shows an embodiment of internal components of a ventilation system 1. The outer structure 33 of the ventilation system 1 is indicated.

The inlet ventilation duct 2 is shown comprising the first ventilator device 10 arranged at the upstream end of said inlet ventilation duct 2 followed by a first filter 34 for filtering the flow of clean air-mixture of any particles or contaminants. The first filter 34 is followed by a compressor unit 35 for providing pressure to the heat exchanging unit, such as a heat pump.

Following the compressor unit 35, the heat pipe unit 22 is shown, comprising five heat pipes 29, 29', 29", 29'", 29"" and first 30 and third heat conducting cover 30" for heating the clean air-mixture in case it is colder than required. The heat pipes 29, 29', 29", 29'", 29"" are shown to have a bent/curved/U shape at the vertically upper part 31 of the heat pipes 29, 29', 29", 29"', 29"". The vertically lower part 31' of the heat pipes 29, 29', 29", 29"', 29"" may also be bent/curved/U-shaped so that the heat pipes 29, 29', 29", 29"', 29"" move back and forth between the top edge 26 and the bottom edge 27 of the heat pipe unit 22. A first part 23 of the heat exchanging unit 22 may heat the clean air-mixture further in case it is not as warm as required. At the downstream end of the inlet ventilation duct 2, a heating surface 36 may heat the clean air-mixture further if required. The heating surface 36 may comprise a pipe structure 36' for guiding a flow of warm liquid and may comprise at least a first cover 37 with a porous structure for facilitating the transfer of heat to the clean air-mixture.

The clean air-mixture may be released to the contaminated area through a first damper 38.

The outlet ventilation duct 3 is shown comprising a second damper 39 for introducing a contaminated air-mixture into the outlet ventilation duct 3. A second filter 40 filters the contaminated air-mixture for contaminants at the upstream end of the outlet ventilation duct 3. The heat pipe unit 22, comprising the five heat pipes 29, 29', 29", 29"', 29"" and second 30' and fourth heat conducting covers 30"', removes heat from the contaminated air-mixture is case it is warmer than the clean air-mixture in the inlet ventilation duct 2. A second part 24 of the heat exchanging unit may be placed downstream of the heat pipe unit 22 to further remove heat from contaminated air-mixture in the outlet ventilation duct 3 if required. A second ventilator device 20 sucks the contaminated air-mixture out of the outlet ventilation duct 3 and releases it to the surroundings 12.

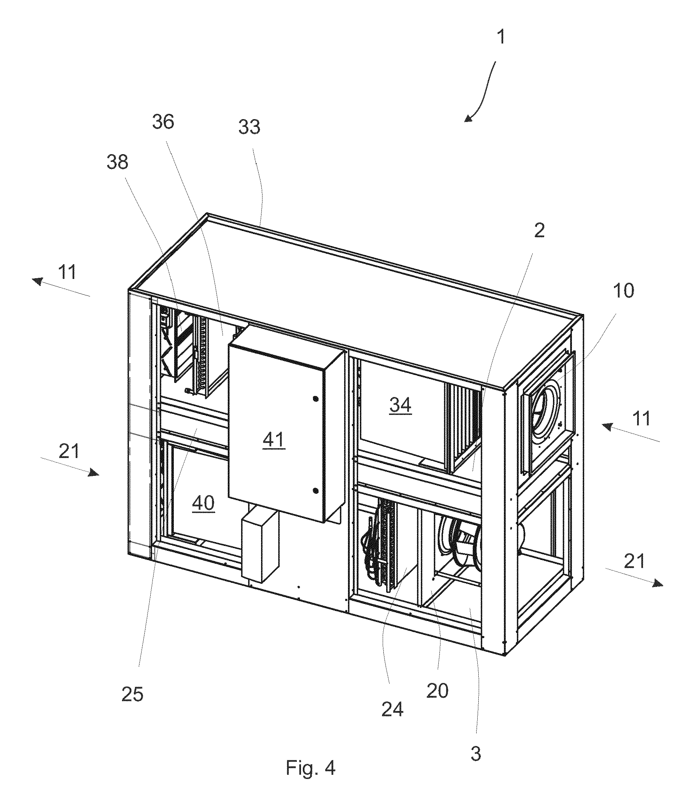

Fig. 4 shows an embodiment of a ventilation system 1 seen in perspective with the side and end plates removed for clarity. The ventilation system 1 is shown with the inlet ventilation duct 2 arranged vertically on top of the outlet ventilation duct 3. A control unit 41 is arranged on the side of the ventilation system 1 for controlling the operation of the ventilation system inter alia the operation of the first 10 and second ventilator devices 20, the heat exchange unit and the heating surface 36.

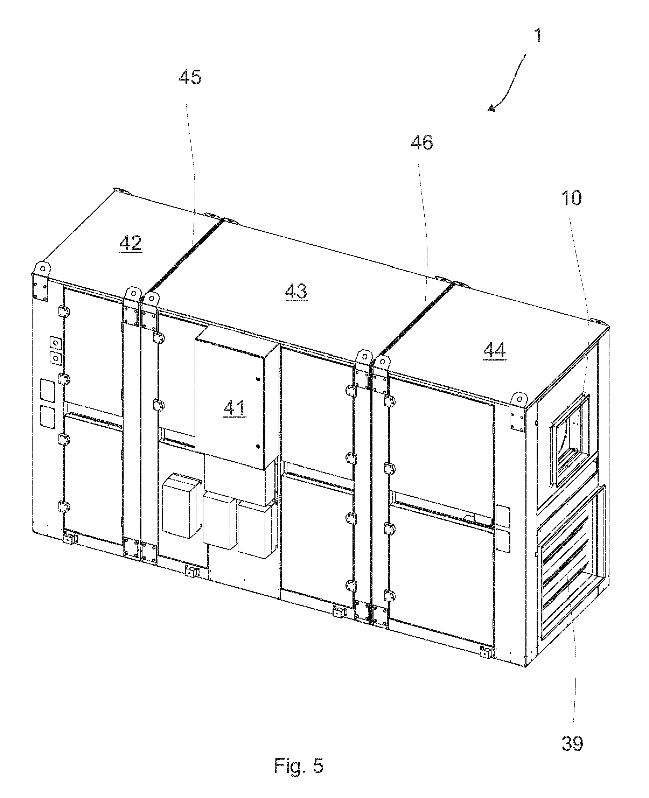

Fig. 5 shows the modules of a ventilation system 1 seen in perspective. The ventilation system 1 comprises at least a first 42, second 43 and third releasably attachable module 44, where the first module 42 may comprise inter alia the outlet 5 of the inlet ventilation duct 2 and the inlet 14 of the outlet ventilation duct 3, the second module 43 may comprise inter alia the heat exchanging unit and the heat pipe unit 22, and the third module 44 may comprise inter alia the inlet 4 of the inlet ventilation duct 2 and the outlet 15 of the outlet ventilation duct 3. Said modules 42, 43, 44 may be connected/attached and provide a leak free seal 45 between said first 42 and second releasably attachable module 43, and between said second 43 and third releasably attachable module 44 so that contaminated air-mixture does not leak to the clean air-mixture in the inlet ventilation duct 2 or to the outside the ventilation system 1.

Modifications and combinations of the above principles and designs are foreseen within the scope of the present invention.

## Claims

1. Ventilation system (1) for ventilating contaminated areas (13) such as hospital or laboratory facilities, the ventilation system comprising

   - an inlet ventilation duct (2) comprising an inlet (4), an outlet (5) and a first ventilator device (10), where the inlet ventilation duct (2) is adapted to guide a flow of a clean air-mixture from the surroundings (12) to the contaminated area (13), and where said flow is provided by the first ventilator device (10),
   - an outlet ventilation duct (3) comprising an inlet (14), an outlet (15) and a second ventilator device (20), where the outlet ventilation duct (3) is adapted to guide a flow of a contaminated air-mixture from the contaminated area (13) to the surroundings (12), and where said flow is provided by the second ventilator device (20),
   - where the inlet ventilation duct (2) is sealed from the outlet ventilation duct (3) to prevent a leak of the contaminated air-mixture from said outlet ventilation duct (3) to said inlet ventilation duct (2), and
   - where the ventilation system (1) comprises a heat recovery unit for exchanging heat between the air-mixtures in the inlet ventilation duct (2) and the outlet ventilation duct (3),
   **characterised in that**
   - the heat recovery unit comprises a heat exchanging unit and a heat pipe unit (22).

2. Ventilation system (1) according to claim 1, wherein the heat pipe unit (22) comprises at least one heat pipe (29, 29', 29", 29"', 29"") extending from the inlet ventilation duct (2) to the outlet ventilation duct (3).

3. Ventilation system (1) according to claim 2, wherein the at least one heat pipe (29, 29', 29", 29"', 29"") is adapted to at least extend from the inlet ventilation duct (2) to the outlet ventilation duct (3) and back into the inlet ventilation duct (2) or reverse.

4. Ventilation system (1) according to any of the preceding claims, wherein the heat pipe unit (22) comprises a heat conducting cover (30, 30', 30", 30"') extending at least partly across the cross-section of the inlet ventilation duct (2) and/or of the outlet ventilation duct (3).

5. Ventilation system (1) according to any of the preceding claims, wherein the heat exchanging unit is adapted to exchange heat by means of condensation and evaporation of a liquid.

6. Ventilation system (1) according to any of the preceding claims, wherein the heat exchanging unit is arranged downstream of the heat pipe unit (22) in the inlet ventilation duct (2) and/or in the outlet ventilation duct (3).

7. Ventilation system (1) according to any of the preceding claims, wherein the heat exchanging unit is a heat pump.

8. Ventilation system (1) according to any of the preceding claims, wherein the first ventilator device (10) is arranged at the inlet (4) of the inlet ventilation duct (2), and the second ventilator device (20) is arranged at the outlet (15) of the outlet ventilation duct (3).

9. Ventilation system (1) according to any of the preceding claims, wherein the inlet ventilation duct (2) and the outlet ventilation duct (3) are extending parallel.

10. Ventilation system (1) according to any of the preceding claims, wherein the inlet ventilation duct (2) and the outlet ventilation duct (3) are arranged adjacently.

11. Ventilation system (1) according to any of the preceding claims, wherein the inlet ventilation duct (2) is located vertically on top of the outlet ventilation duct (3).

12. Ventilation system (1) according to any of the preceding claims, wherein the ventilation system (1) comprises an intermediate region (25) between the inlet ventilation duct (2) and the outlet ventilation duct (3), where the intermediate region (25) provides an leak free seal between the inlet ventilation duct (2) and the outlet ventilation duct (3).

13. Ventilation system (1) according to any of the preceding claims, wherein the ventilation system (1) comprises at least a first (42), second (43) and third releasably attachable module (44), where

    - the first module (42) comprises the outlet (5) of the inlet ventilation duct (2) and the inlet (14) of the outlet ventilation duct (3),
    - the second module (43) comprises the heat exchanging unit and the heat pipe unit (22), and
    - the third module (44) comprises the inlet (4) of the inlet ventilation duct (2) and the outlet (15) of the outlet ventilation duct (3).

14. Ventilation system (1) according to any of the preceding claims, wherein the ventilation system (1) further comprising a heating surface (36).

15. Heat recovery unit for use in a ventilation system (1) according to the preceding claims for ventilating contaminated areas (13) such as hospital or laboratory facilities, the heat recovery unit comprising

    - a heat exchanging unit, and
    - a heat pipe unit (22),
    **characterised in that**
    - the heat recovery unit is for exchanging heat between an air-mixture in an inlet ventilation duct (2) and an air-mixture in an outlet ventilation duct (3) of the ventilation system (1).

Fig. 1

Fig. 2A

Fig. 2B

1

31   26
30''''   29'
36   37     30'''   29    29''
38      23          29'''
35   34   2   33
11
22   10
36'
11
21
39
40   27   30'   24   20
3

Fig. 3

Fig. 4

Fig. 5

Europäisches
Patentamt

European
Patent Office

Office européen
des brevets

# EUROPEAN SEARCH REPORT

Application Number

EP 16 18 7246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 195 00 527 A1 (KULMBACHER KLIMAGERAETE [DE]) 18 July 1996 (1996-07-18) * column 4 - column 7; claims 1-7; figures 1-2 * | 1-15 | INV. F24F12/00 |
| X | WO 2008/127660 A1 (AIR INNOVATIONS INC [US]; WETZEL LAWRENCE E [US]) 23 October 2008 (2008-10-23) | 15 | |
| A | * the whole document * | 1-14 | |
| X | US 2002/022449 A1 (BEAINI PETER J [CA]) 21 February 2002 (2002-02-21) | 15 | |
| A | * paragraph [0007] - paragraph [0012]; figures 1-3 * | 1-14 | |
| A | US 5 502 975 A (BRICKLEY STEPHEN C [US] ET AL) 2 April 1996 (1996-04-02) * abstract; figure 1 * | 1-15 | |

TECHNICAL FIELDS
SEARCHED      (IPC)

F24F

The present search report has been drawn up for all claims

| Place of search | Date of completion of the search | Examiner |
|---|---|---|
| Munich | 10 March 2017 | Djemour, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 18 7246

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | | Publication date | Patent family member(s) | | | Publication date |
|---|---|---|---|---|---|---|---|
| DE 19500527 | | A1 | 18-07-1996 | NONE | | | |
| WO 2008127660 | | A1 | 23-10-2008 | CA | 2682821 | A1 | 23-10-2008 |
| | | | | EP | 2156102 | A1 | 24-02-2010 |
| | | | | US | 2008250800 | A1 | 16-10-2008 |
| | | | | WO | 2008127660 | A1 | 23-10-2008 |
| US 2002022449 | | A1 | 21-02-2002 | CA | 2306022 | A1 | 18-10-2001 |
| | | | | US | 2002022449 | A1 | 21-02-2002 |
| US 5502975 | | A | 02-04-1996 | NONE | | | |

EPO FORM P0459

For more details about this annex : see Official Journal of the European Patent Office, No. 12/82